# EUROPÄISCHE PATENTSCHRIFT

(11) **EP 0 509 393 B1**
(45) Veröffentlichungstag und Bekanntmachung des Hinweises auf die Patenterteilung: **22.01.1997**
(21) Anmeldenummer: 92106147.9
(22) Anmeldetag: 09.04.1992
(51) Int. Cl.: C09D 5/03, C09D 125/14, C08G 59/32, B05D 7/26

(54) **Pulverförmige Überzugsmittel**
Powder coating
Revêtement à poudre

(30) Priorität: 18.04.1991 DE 4112687
(43) Veröffentlichungstag der Anmeldung: 21.10.1992
(73) Patentinhaber: HOECHST AKTIENGESELLSCHAFT, 65926 Frankfurt am Main (DE)
(72) Erfinder: Fink, Dietmar, Dipl.-Ing., W-6204 Tanusstein (DE); Godau, Claus, Dipl.-Ing., W-6229 Kiedrich (DE); Just, Christoph, Dr., W-6272 Niedernhausen (DE); Plum, Helmut, Dr., W-6204 Taunusstein (DE)

(56) Entgegenhaltungen:
- FR-A- 2 272 155
- FR-A- 2 290 467

## Beschreibung

Die Erfindung betrifft pulverförmige Überzugsmittel oder auch Pulverlacke genannt, die Mischungen aus epoxidgruppenhaltigen Acrylatharzen und verschiedenen Härtungsmitteln darstellen.

Pulverlacke, die als wesentliches Bindemittel ein epoxidgruppenhaltiges Acrylat-Copolymerisat enthalten, sind gut bekannt. Sie sind z.B. in folgenden Patenten beschrieben: US 3 730 930, US 3 752 870, US 3 781 379, US 3 787 521, US 4 091 049, US 4 091 048, US 3 939 127, US 3 932 367, US 3 991 132, US 3 991 133, US 4 092 373, US 4 044 070, US 4 374 954, US 4 346 144, DE 23 53 040, DE 24 23 886, DE 24 41 753 und DE 25 09 410. Als Härter werden dabei zweibasische Säuren, deren Anhydride oder Substanzen, die eine zweibasische Säure unter Härtungsbedingungen bilden, eingesetzt. Nach der EP 299 420 kann der Härter auch ein Reaktionsprodukt aus einem Polyanhydrid und einem Polyol sein.

In der FR-A 2 290 467 werden Pulverlackharze beschrieben, die aus einem epoxidgruppenhaltigen Polymer mit einer Erweichungstemperatur von 80 bis 150 °C und einer mittleren moalern Masse von 3 bis 15 kg/mol und einer gesättigten aliphatischen Dicarbonsäure bestehen.

In der FR-A 2 272 155 werden Pulverbeschichtungsmassen beschrieben, die Mischungen aus einem glycidylgruppenhaltigen Copolymeren, mindestens einer aliphatischen Dicarbonsäure, einem Fließhilfsmittel und weiteren Additiven sind.

Die in den zuvor genannten Patenten beschriebenen Copolymerisate enthalten nur bis zu 30 Gew.-% an Glycidylacrylat bzw. Glycidylmethacrylat, der Rest des Copolymeren besteht aus anderen ungesättigten Monomeren. Als solche ungesättigten Verbindungen kommen eine große Anzahl derartiger Verbindungen in Frage, unter anderem auch Styrol und Alkylester von aliphatischen ungesättigten Mono- oder Dicarbonsäuren. In allen Beispielen des zuvor genannten Standes der Technik werden, soweit die dort benutzten Copolymerisate Styrol enthalten, zum Aushärten des Pulverlacks Katalysatoren benötigt. Als Katalysator wird ausschließlich Tetraalkylammoniumbromid benutzt. Salze dieser Art beeinträchtigen jedoch die Beständigkeit der Lacke gegen Wasser, Säuren und Laugen erheblich. Außerdem sind gemäß den Beispielen des Standes der Technik bei der Aushärtung von Pulverlacken auf der Basis von Copolymerisaten mit einem Gehalt von Styrol in den meisten Fällen relativ hohe Temperaturen (über 140 °C) notwendig. Für viele Anwendungszwecke, beispielsweise bei der Lackierung von Holz, Kunststoffen oder bei der Automobillackierung als Decklack über einem temperaturempfindlichen Basislack, ist es jedoch vorteilhaft, daß die pulverförmigen Überzugmittel bei möglichst niedrigen Temperaturen, etwa schon ab 120 °C, aushärten.

Die Aufgabe der vorliegenden Erfindung bestand also darin, Pulverlacksysteme bereitzustellen, die auch ohne Katalysatoren oder mit möglichst geringen Mengen davon bei Temperaturen ab 120 °C zu Lacken mit guten Eigenschaften aushärten. Diese Aufgabe kann überraschend dadurch gelöst werden, daß das epoxidgruppenhaltige Acrylat-Copolymer eine bestimmten Styrolgehalt aufweist. Warum die Reaktivität der Acrylat-Copolymeren vom Styrolgehalt abhängt, ist unklar. Obwohl, wie vorhergehend erläutert, epoxidgruppenhaltige Acrylat-Pulverlacke sehr zahlreich beschrieben sind, ist dieser überraschende Effekt nirgendwo erwähnt.

Gegenstand der Erfindung sind pulverförmige Überzugsmittel bestehend aus
(A) einem Copolymeren, das Glycidylgruppen enthält,
(B) einem monomeren oder polymeren Anhydrid oder einem Polyol-modifizierten Anhydrid einer aliphatischen oder cycloaliphatischen zweibasigen Säure,
(C) gegebenenfalls Pigmenten und anderen Additiven, dadurch gekennzeichnet, daß das Copolymer (A) ein Molekulargewicht (Mn) von 1.000 - 10.000 und eine Glasübergangstemperatur von 30 - 90 °C besitzt und ein Mischpolymerisat ist aus
   a) mindestens 20 Gew.-% Glycidylacrylat oder Glycidylmethacrylat,
   b) 35 - 50 Gew.-% Styrol,
   c) 10 - 51 Gew.-% eines oder mehrerer Alkylester von aliphatischen ungesättigten Mono- oder Dicarbonsäuren, sowie
   d) 0 - 50 Gew.-% eines oder mehrerer anderer olefinisch ungesättigter Monomeren.

Bevorzugt sind Copolymere A mit folgender Zusammensetzung:
20 - 43 Gew.-% Glycidylmethacrylat,
35 - 45 Gew.-% Styrol,
12 - 51 Gew.-% Acryl- oder Methacrylsäurealkylester,
und Copolymere folgender Zusammensetzung:
20 - 43 Gew.-% Glycidylmethacrylat,
40 - 50 Gew.-% Styrol,
10 - 30 Gew.-% eines Dialkylesters einer olefinisch ungesättigten Dicarbonsäure,
0 - 36 Gew.-% Acryl- oder Methacrylsäurealkylester.

Als Alkylester von ungesättigten Carbonsäuren kommen in Frage, die sich von einwertigen Alkoholen ableiten, vorzugsweise solchen mit 1 - 18 besonders bevorzugt mit 1 - 12 C-Atomen, wie Methyl-, Ethyl, n-Propyl; Isopropyl-, n-Butyl, Isobutyl-, sec. Butyl-, n-Pentyl, n-Hexyl-, 2-Ethylhexyl-, n-Octyl-, n-Nonyl-, Isononyl-, n-Decyl-, n-Dodecyl-, n-Tridecyl-, Isotridecyl-, Myristyl-, Cetyl-, Stearyl-, Eicosyl-, Isobornylacrylat bzw. -methacrylat. Es ist ebenfalls möglich, geringe Mengen, d.h. bis zu 5 Gew.-% eines Diacrylates oder Dimethacrylates eines zwei- oder dreiwertigen Alkohols einzusetzen, wie z.B. Hexandioldiacrylat oder Butandioldiacrylat oder -dimethacrylat oder Trimethylolpropantriacrylat oder tri-methacrylat. Andere Monomere, die ggf. in Mischung mit den Acryl- oder Methacrylsäureestern eingesetzt werden können, sind die Ester aus α, β-ungesättigten Dicarbonsäuren wie z.B. Malein- oder Fumarsäuren und gesättigten einwertigen Alkoholen, z.B. Dimethylmaleinat, Diethylfumarat, Dibutylmaleinat, Dibutylfumarat usw.. Als weitere Comonomere kommen Acryl- oder Methacrylamid, Styrol, Vinyltoluol, α-Methylstyrol, tert.-Butylstyrol, Vinylchlorid, Acrylnitril, Methacrylnitril oder Vinylacetat in Frage (Komponente d).

Die Acrylatharze können durch die bekannten Polymerisationsverfahren wie Lösungs-, Emulsions-, Perl- oder Substanzpolymerisation hergestellt werden. Besonders bevorzugt sind Acrylatharze, die durch Lösungspolymerisation oder nach einem Substanzpolymerisationsverfahren hergestellt sind wie z.B. in der EP 56 971 beschrieben.

Die Acrylatharze besitzen eine Glasübergangstemperatur von 30 - 90 °C. Die bevorzugte Glasübergangstemperatur liegt im Bereich von 30 - 60 °C. Die Molekulargewichte (Zahlenmittel bezogen auf Polystyrol-Standard) betragen im allgemeinen 1.000 - 10.000 vorzugsweise 1.000 - 5.000.

Die in der Erfindung als Härtungsmittel - Komponente (B)-verwendeten Anhydride von aliphatischen zweibasigen Säuren sind z.B. die Anhydride von Adipinsäure, Pimelinsäure, Suberinsäure, Azelainsäure, Sebacinsäure, Malonsäure, Bernsteinsäure, Glutarsäure, 1,12-Dodecandisäure, usw.. Die Polymeren dieser Säuren können ebenfalls verwendet werden. Diese Polyanhydride werden durch intermolekulare Kondensation der genannten aliphatischen zweibasischen Dicarbonsäure erhalten. Beispiele sind Adipinsäure(poly)anhydrid, Azelainsäure(poly)anhydrid, Sebacinsäure(poly)anhydrid, Dodecandisäure(poly)anhydrid usw.. Die Polyanhydride haben ein Molekulargewicht (Gewichtsmittel bezogen auf PolystyrolStandard) von 1.000 - 5.000. Die Polyanhydride können auch, wie in der EP 299 420 beschrieben, mit Polyol modifiziert werden. Die Polyanhydride sind bei Raumtemperatur fest. Die Herstellung der Polyanhydride erfolgt durch Reaktion der Dicarbonsäuren mit Essigsäureanhydrid bei Temperaturen von 120 - 200 °C vorzugsweise 120 - 170 °C. Dabei wird Essigsäure abgespalten. Die Entfernung der Essigsäure kann durch Destillation unter Vakuum beschleunigt werden.

Die Polyanhydride können auch im Gemisch mit den aliphatischen zweibasischen Dicarbonsäuren als Härtungsmittel eingesetzt werden oder im Gemisch mit Hydroxycarbonsäuren, die Schmelzpunkte zwischen 40 °C und 150 °C besitzen, z.B. 12-Hydroxy-Stearinsäure, 2- bzw. 3- bzw. 10-Hydroxyoctadecansäure, 2-Hydroxymyristinsäure.

Die Menge der als Härtungsmittel - Komponente (B) - eingesetzten Anhydride, bezogen auf das Acrylatharz, kann über einen weiten Bereich variieren und richtet sich nach der Anzahl der Epoxydgruppen im Acrylatharz. Im allgemeinen wird ein Molverhältnis von Anhydridgruppen zu Epoxydgruppen von 0,4 - 1,4:1 bevorzugt von 0,8 - 1,2:1 gewählt.

Der Pulverlack kann die üblichen Pigmente und Füllstoffe enthalten. Er kann darüber hinaus auch einen Katalysator enthalten, um die Vernetzungsgeschwindigkeit zu erhöhen und.die Härtungstemperatur zu erniedrigen. Geeignete Katalysatoren sind Tetraalkylammonium- oder Phosphoniumsalze, Imidazole, tert.- Amine, Metallsalze von organischen Carbonsäuren oder Phosphine. In den meisten Fällen ist die Anwesenheit eines Katalysators jedoch nicht erforderlich.

Der Pulverlack kann außerdem verschiedene Additive enthalten wie sie üblicherweise in Pulverlacken eingesetzt werden, insbesondere Entgasungsmittel wie z.B. Benzoin, das im allgemeinen in Mengen von 0,1 - 3 Gew.-% eingesetzt wird. Weiterhin können Verlaufsmittel verwendet werden z.B. oligomere Poly(meth)acrylate wie z.B. Polylauryl(meth)acrylat, Polybutyl(meth)acrylat, Poly-2-ethylhexyl(meth)acrylat oder fluorierte Polymere oder Polysiloxane. Zur Verbesserung der Wetterbeständigkeit können die bekannten UV-Absorber und Antioxidantien zugegeben werden.

Die Komponenten A, B und C des Pulverlacks werden zunächst trocken gemischt und anschließend mit einem Doppelschneckenextruder bei einer Temperatur von 80 - 130 °C, vorzugsweise 80 - 100 °C extrudiert. Das Extrudat wird nach Abkühlung und Zerkleinerung in einer Mühle gemahlen, wobei eine mittlere Teilchengröße von 20 - 90 µm vorzugsweise 40 - 70 µm angestrebt wird. Ein eventuell vorhandener Grobkornanteil kann abgesiebt werden.

Der Pulverlack wird nach einer der üblichen Methoden, beispielsweise durch elektrostatisches oder Tribospritzen appliziert. Nach der Applikation wird bei einer Temperatur von 120 - 200 °C ausgehärtet, vorzugsweise liegt die Härtungstemperatur bei 130 - 160 °C.

Der Pulverlack eignet sich besonders als Klarlack auf wäßrigen Basislacken. Man erhält 2-Schicht-Lackierungen mit außergewöhnlicher oberflächenglätte, Glanz, Chemikalien- und Wetterbeständigkeit.

### Beispiele

### 1. Herstellung von Dodecandisäurepolyanhydrid

69,27 Gew.-Teile Dodecandisäure und 30,73 Gew.-Teile Essigsäureanhydrid wurden auf 150 °C erhitzt. Dabei wurde Essigsäure abdestilliert. Sobald keine Essigsäure mehr destillierte, wurde die Temperatur auf 170 °C erhöht und zunächst unter Normaldruck, dann unter Vakuum weiter Essigsäure abdestilliert. Das Vakuum wurde so gesteuert, daß nur Essigsäure, aber kein Essigsäureanhydrid abdestillierte. Anschließend hielt man weitere 3 Std. bei 170 °C/20 mbar und kühlte dann ab. Der Rückstand besaß einen Schmelzpunkt von ca. 84 °C.

### 2.1 Herstellung der epoxydgruppen-haltigen Acrylatharze

Solvesso 100 wurde unter Stickstoff auf 150 °C vorgelegt. Dann wurde die Monomerenmischung zusammen mit dem Initiator bei 150 °C innerhalb von 7 Std. gleichmäßig zudosiert. Nach Dosierende hielt man weitere 2 Std. bei 150 °C und destillierte dann das Solvesso ab, zuerst bei 150 °C und Normaldruck, zuletzt bei 170 °C und 18 mbar. Man erhielt ein festes, farbloses Harz. Die Zusammensetzungen und Kenndaten sind in Tabelle 1 zusammengestellt (Gewichtsteile = GT):

| Tabelle 1 | 1a (Vergleich) | 1b (Vergleich) | 1c | 1d (Vergleich) |
|---|---|---|---|---|
| Solvesso 100 | 15,00 GT | 15,00 GT | 15,00 GT | 15,00 GT |
| Glycidylmethacrylat | 31,64 " | 31,64 " | 31,64 " | 16,00 " |
| t-Butylmethacrylat | 15,56 " | 15,56 " | 15,56 " | 15,56 " |
| Methylmethacrylat | 42,80 " | 32,80 " | 12,80 " | 28,44 " |
| Styrol | 10,00 " | 20,00 " | 40,00 " | 40,00 " |
| Di-tert.-butylperoxid | 1,50 " | 1,50 " | 1,50 " | 1,50 " |
| Viskosität (Ubbelohde, 50%-ig in Butyl acetat, 20 °C) | 460 | 300 | 390 | 490 mPa.s |
| Glastemperatur | 44 | 41 | 54 | 48 °C |
| Mw | 10.000 | 9.300 | 20.400 | 17.000 |
| Epoxidäquivalentgewicht | 490 | 500 | 500 | 528 g/mol |

### 2.2 Herstellung und Prüfung der Pulver-Klarlacke

737 Gew.-Teile der Harze 1a - 1c, 250 Gew.-Teile Dodecandisäurepolyanhydrid (bzw. 773 Gew.-Teile Harz 1d und 224 Gew.-Teile Dodecandisäurepolyanhydrid) und 3 Gew.-Teile Benzoin wurden zunächst trocken gemischt. Diese Mischung wurde dann auf einem Laborextruder bei Temperaturen von 80 - 120 °C in der Schmelze dispergiert. Das Extrudat wurde nach Abkühlung und Vorzerkleinerung auf einer Gebläsemühle auf eine durchschnittliche Korngröße von 50 µm zu einem Pulverlack gemahlen. Der Grobkornanteil von Teilchengrößen oberhalb 90 µm wurde abgesiebt. Der Pulverlack wurde mit einer elektrostatischen Pulversprühanlage bei 60 KV auf entfettete, geerdete Eisenbleche so aufgespritzt, daß nach dem Einbrennen bei 140 °C/30 min eine Schichtdicke von 60 µm resultierte. Die Prüfergebnisse sind in Tabelle 3 zusammengestellt:

| Tabelle 2 | 1a (Vergleich) | 1b (Vergleich) | 1c | 1d (Vergleich) |
|---|---|---|---|---|
| Gelzeit (140 °C) | 450 | 235 | 195 | 245 s |
| Fließstrecke bei 140 °C (DIN 16916^{a)}) | 125 | 123 | 80 | 70 mm |
| Glanz (60° DIN 67530) | 104 | 108 | 104 | 105 ° |
| Verlauf | gut | sehr gut | sehr gut | gut |
| Erichsentiefung (DIN 53156) | 13,0 | 11,9 | 10,8 | 11,3 mm |
| Gitterschnitt (DIN 52151) | 0 | 0 | 0 | 1 |
| Schlagprüfung (ASTM D 2794; rückseitig) | 20-40 | 20-40 | 80 | < 4i.p. |

| | | | | |
|---|---|---|---|---|
| ^{a)} Einwaage: 0,2 g; Untergrund: entfettetes Stahlblech; 1 min. waagrecht, dann 60 ° Neigung | | | | |

Bei niedrigem styrolgehalt (10 und 20%, Beispiele 1a und 1b) ist die Reaktivität gering. und die Prüfung der schlagtiefung liefert schlechte Werte. Das Harz 1d mit einem Glycidylmethacrylat-Gehalt unter 20 Gew.-% zeigt eine völlig unzureichende Schlagtiefung. Bei den Harzen mit dem niedrigeren Styrolgehalt ist außerdem die Fließstrecke bei 140 °C so lang, daß es beim senkrechten Einbrennen der lackierten Bleche zu einer starken Wulstbildung und zum Abtropfen am unteren Ende des Bleches kommen kann.

### 3.1 Herstellung der epoxydgrupgen-haltigen Acrylatharze:

Maleinsäuredi-isopropylester wurde vorgelegt und auf 175 °C erwärmt. Dann wurde die Monomerenmischung zusammen mit dem Initiator bei 175 °C innerhalb von 7 Std. gleichmäßig zudosiert. Anschließend hielt man noch 1 Std. bei dieser Temperatur und destilliert dann im Vakuum (18 mbar) flüchtige Bestandteile (Initiatorspaltprodukte) ab. Man erhielt ein festes, farbloses Harz. Die Zusammensetzungen und Kenndaten sind in Tabelle 3 zusammengestellt (Gew.-Teile: GT):

| Tabelle 3 | 2a | 2b | 2c (Vergleich) |
|---|---|---|---|
| Di-isopropylmaleinat | 26,89 GT | 25,00 GT | 15,00 GT |
| Glycidylmethacrylat | 28,29 " | 28,29 " | 28,29 " |
| Methylmethacrylat | 0,70 " | 5,66 " | 31,88 " |
| Styrol | 43,62 " | 40,55 " | 24,33 " |
| Di-tert.butylperoxid | 0,50 " | 0,50 " | 0,50 " |
| Visk. (Platte, Kegel, D= 100 s, 170 °C) | 880 | 790 | 810 mPa.s |
| Visk. (Ubbelohde, 50%ig in Xylol, 20 °C) | 53 | 51 | 80 |
| Glastemperatur | 36 | 33 | 25 °C |
| Mw | 4 800 | 4.990 | 5.000 |
| Epoxyäquivalentgewicht | 535 | 535 | 535 g/mol |

### 3.2. Erstellung und Prüfung der Pulverklarlacke:

Aus 737 Gew.-Teile der Harze 2a - 2d, 224 Gew.-Teilen Dodecandisäurepolyanhydrid und 3 Gew.-Teilen Benzoin wurden, wie in 1.2 beschrieben, Pulverlacke hergestellt und appliziert. Nach dem Einbrennen resultiert eine Schichtstärke von 60 nm. Die Prüfungsergebnisse sind in Tabelle 4 zusammengestellt.

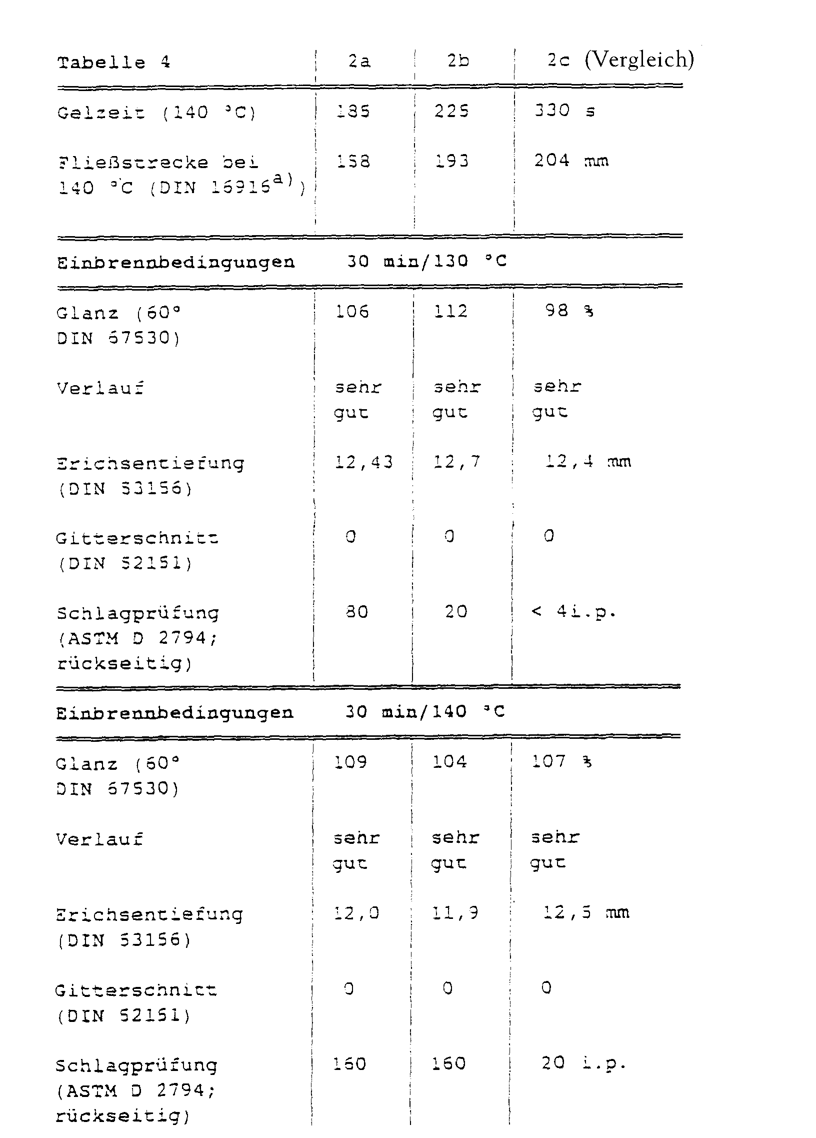

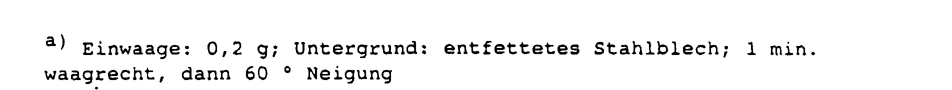

Es ist deutlich zu erkennen, daß mit steigendem Styrolgehalt die Reaktivität zunimmt. Die gleiche Reaktivitätsreihenfolge erhält man, wenn man statt Dodecandisäurepolyanhydrid Dodecandisäure als Härter einsetzt.

## Patentansprüche

1. Pulverförmiges Überzugsmittel bestehend aus
(A) einem Copolymeren, das Glycidylgruppen enthält,
(B) einem monomeren oder polymeren Anhydrid oder einem polyolmodifizierten Anhydrid einer aliphatischen oder cycloaliphatischen zweibasigen Säure,
(C) gegebenenfalls Pigmenten und anderen Additiven,
dadurch gekennzeichnet, daß das Copolymer (A) ein Molekulargewicht (Mn) von 1.000 - 10.000 und eine Glasübergangstemperatur von 30 - 90 °C besitzt und ein Mischpolymerisat ist aus
a) mindestens 20 Gew.-% Glycidylacrylat oder Glycidylmethacrylat,
b) 35 - 50 Gew.-% Styrol,
c) 10 - 51 Gew.-% eines oder mehrerer Alkylester von aliphatischen ungesättigten Mono- oder Dicarbonsäuren, sowie
d) 0 - 50 Gew.-% eines oder mehreren anderen olefinisch ungesättigten Monomeren.

2. Pulverförmiges Überzugsmittel nach Anspruch 1, dadurch gekennzeichnet, daß das Copolymer (A) aus
a) 20 - 43 Gew.-% Glycidylmethacrylat,
b) 35 - 45 Gew.-% Styrol und
c) 12 - 51 Gew.-% Acryl- oder Methacrylsäurealkylester besteht.

3. Pulverförmiges Überzugsmittel nach Anspruch 1, dadurch gekennzeichnet, daß das Copolymer (A) besteht aus
a) 20 - 43 Gew.-% Glycidylmethacrylat,
b) 40 - 50 Gew.-% Styrol,
c) 10 - 30 Gew.-% eines Dialkylesters einer olefinisch ungesättigten Dicarbonsäure,
d) 0 - 36 Gew.-% Acryl- oder Methacrylsäurealkylester.

4. Pulverförmiges Überzugsmittel nach Anspruch 1, dadurch gekennzeichnet, daß das Copolymer (A) durch Lösungs- oder Substanzpolymerisation hergestellt wird.

5. Pulverförmiges Überzugsmittel nach Anspruch 1, dadurch gekennzeichnet, daß die Komponente (B) ein monomeres, polymeres oder polyolmodifiziertes Anhydrid einer gesättigten aliphatischen Dicarbonsäure ist, ausgewählt aus Adipinsäure, Pimelinsäure, Suberinsäure, Azelainsäure, Sebacinsäure, Malonsäure, Bernsteinsäure, Glutarsäure und 1,12-Dodecandisäure.

6. Pulverförmiges Überzugsmittel nach Anspruch 1, dadurch gekennzeichnet, daß die Komponente (B) ein monomeres Anhydrid einer aliphatischen Dicarbonsäure ist.

7. Pulverförmiges Überzugsmittel nach Anspruch 1, dadurch gekennzeichnet, daß die Komponente (B) ein Polyanhydrid einer aliphatischen Dicarbonsäure ist.

8. Pulverförmiges Überzugsmittel nach Anspruch 1, dadurch gekennzeichnet, daß die Komponente (B) ein Umsetzungsprodukt aus dem Polyanhydrid einer aliphatischen Dicarbonsäure und einem Polyol ist.

9. Pulverförmiges Überzugsmittel nach Anspruch 1, dadurch gekennzeichnet, daß die Komponente (B) in einer Menge vorhanden ist, die 0,4 bis 1,4 Carboxyl und/oder Anhydridgruppen pro Epoxidgruppen am Copolymeren (A) entspricht.

10. Verwendung des Überzugsmittels nach Anspruch 1 zur Herstellung von Überzügen.

11. Verwendung des Überzugsmittels nach Anspruch 1 als Klarlack auf wäßrigen Basislacken.

## Claims

1. A coating composition in powder form which is composed of
(A) a copolymer containing glycidyl groups,
(B) a monomeric or polymeric anhydride or a polyol-modified anhydride of an aliphatic or cycloaliphatic dibasic acid,
(C) optionally, pigments and other additives, wherein the copolymer (A) has a molecular weight (Mn) of 1,000 - 10,000 and a glass trasition temperature of 30 - 90 °C and is a mixed polymer composed of
a) at least 20 % by weight of glycidyl acrylate or glycidyl methacrylate,
b) 35 - 50 % by weight of styrene,
c) 10 - 51 % by weight of one or more alkyl esters of aliphatic unsaturated monocarboxylic or dicarboxylic acids and
d) 0 - 50 % by weight of one or more other olefinically unsaturated monomers.

2. The coating composition in powder form as claimed in claim 1, wherein the copolymer (A) is composed of
a) 20 - 43 % by weight of glycidyl methacrylate,
b) 35 - 45 % by weight of styrene and
c) 12 - 51 % by weight of alkyl acrylates or methacrylates.

3. The coating composition in powder form as claimed in claim 1, wherein the copolymer (A) is composed of
a) 20 - 43 % by weight of glycidyl methacrylate ,
b) 40 - 40 % by weight of styrene,
c) 10 - 30 % by weight of dialkyl ester of olefinically unsaturated dicarboxylic acid
d) 0 - 36 % by weight of alkyl acrylates or methacrylates.

4. The coating composition in powder form as claimed in claim 1, wherein the copolymer (A) is prepared by solution or bulk polymerization.

5. The coating composition in powder form as claimed in claim 1, wherein the component (B) is a monomeric, polymeric or polyol-modified anhydride of a saturated aliphatic dicarboxylic acid, selected from the group comprising adipic, pimelic, suberic, azelaic, sebacic, malonic, succinic, glutaric and 1,12-dodecanedionic acids.

6. The coating composition in powder form as claimed in claim 1, wherein the component (B) is a monomeric anhydride of an aliphatic dicarboxylic acid.

7. The coating composition in powder form as claimed in claim 1, wherein the component (B) is a polyanhydride of an aliphatic dicarboxylic acid.

8. The coating composition in powder form as claimed in claim 1, wherein the component (B) is a reaction product of the polyanhydride of an aliphatic dicarboxylic acid and a polyol.

9. The coating composition in powder form as claimed in claim 1, wherein the component (B) is present in an amount corresponding to 0.4 to 1.4 carboxyl and/or anhydride groups per epoxide groups of the copolymer (A).

10. Use of the coating composition as claimed in claim 1 for the production of coatings.

11. Use of the coating composition as claimed in claim 1 as clearcoat for aqeuous basecoats.

## Revendications

1. Produit de revêtement en poudre, constitué
(A) d'un copolymère contenant des groupes glycidyle,
(B) d'un anhydride monomère ou polymère ou d'un anhydride modifié par un polyol d'un diacide cycloaliphatique ou aliphatique,
(C) éventuellement, de pigments et d'autres additifs, caractérisé en ce que le copolymère (A) a une masse moléculaire (Mn) de 1000 à 10 000 et une température de transition vitreuse de 30 à 90°C, et est un copolymère
a) d'au moins 20 % en poids d'acrylate de glycidyle ou de méthacrylate de glycidyle,
b) de 35 à 50 % en poids de styrène,
c) de 10 à 51 % en poids d'un ou plusieurs esters alkyliques d'acides mono- ou dicarboxyliques aliphatiques insaturés, et
d) de 0 à 50 % en poids d'un ou plusieurs autres monomères à insaturation oléfinique.

2. Produit de revêtement en poudre selon la revendication 1, caractérisé en ce que le copolymère (A) est constitué
a) de 20 à 43 % en poids de méthacrylate de glycidyle,
b) de 35 à 45 % en poids de styrène, et
c) de 12 à 51 % en poids d'un acrylate ou d'un méthacrylate d'alkyle.

3. Produit de revêtement en poudre selon la revendication 1, caractérisé en ce que le copolymère (A) est constitué
a) de 20 à 43 % en poids de méthacrylate de glycidyle,
b) de 40 à 50 % en poids de styrène,
c) de 10 à 30 % en poids d'un ester dialkylique d'un acide dicarboxylique à insaturation oléfinique,
d) de 0 à 36 % en poids d'un acrylate ou d'un méthacrylate d'alkyle.

4. Produit de revêtement en poudre selon la revendication 1, caractérisé en ce que le copolymère (A) est préparé par polymérisation en solution ou sans solvant.

5. Produit de revêtement en poudre selon la revendication 1, caractérisé en ce que le constituant (B) est un anhydride monomère, polymère ou modifié par un polyol, d'un acide dicarboxylique aliphatique saturé, choisi parmi l'acide adipique, l'acide pimélique, l'acide subérique, l'acide azélaïque, l'acide sébacique, l'acide malonique, l'acide succinique, l'acide glutarique et l'acide 1,12-dodécanedioïque.

6. Produit de revêtement en poudre selon la revendication 1, caractérisé en ce que le constituant (B) est un anhydride monomère d'un acide dicarboxylique aliphatique.

7. Produit de revêtement en poudre selon la revendication 1, caractérisé en ce que le constituant (B) est un polyanhydride d'un acide dicarboxylique aliphatique.

8. Produit de revêtement en poudre selon la revendication 1, caractérisé en ce que le constituant (B) est un produit de la réaction du polyanhydride d'un acide dicarboxylique aliphatique et d'un polyol.

9. produit de revêtement en poudre selon la revendication 1, caractérisé en ce que le constituant (B) est présent en une quantité correspondant à 0,4-1,4 groupes carboxyle et/ou anhydride par groupe époxyde du copolymère (A).

10. Utilisation du produit de revêtement selon la revendication 1 pour réaliser des revêtements.

11. Utilisation du produit de revêtement selon la revendication 1 en tant que vernis transparent sur des vernis de base aqueux.
